# EUROPEAN PATENT APPLICATION

(11) **EP 4 325 761 A1**
(43) Date of publication of application: **21.02.2024**
(21) Application number: 22787590.3
(22) Date of filing: 14.04.2022
(51) Int. Cl.: H04L 5/00, H04W 72/04

(54) **METHOD AND APPARATUS FOR DETERMINING SIDELINK FEEDBACK RESOURCE, TERMINAL AND STORAGE MEDIUM**

(30) Priority: 15.04.2021 CN 202110408200
(71) Applicant: Vivo Mobile Communication Co., Ltd., Dongguan, Guangdong 523863 (CN)
(72) Inventor: PENG, Shuyan, Dongguan, Guangdong 523863 (CN); JI, Zichao, Dongguan, Guangdong 523863 (CN)
(74) Representative: Murgitroyd & Company
(86) International application number: PCT/CN2022/086762
(87) International publication number: WO 2022/218368

(57) **Abstract**

This application pertains to the field of communications technologies, and discloses a method and an apparatus for determining a sidelink feedback resource, a UE, and a storage medium. The method for determining a sidelink feedback resource in an embodiment of this application includes: first UE determines a sidelink SL feedback resource, where the SL feedback resource is used by the first UE to send feedback information; or the method for determining a sidelink feedback resource in an embodiment of this application includes: feedback-information receiving-side device detects or receives feedback information on a sidelink SL feedback resource, where the SL feedback resource is used by first UE to send the feedback information.

## Description

### CROSS-REFERENCE TO RELATED APPLICATIONS

This application claims priority to Chinese Patent Application No. 2021104082000, filed on April 15, 2021 and entitled "METHOD AND APPARATUS FOR DETERMINING SIDELINK FEEDBACK RESOURCE, TERMINAL, AND STORAGE MEDIUM", which is incorporated herein by reference in its entirety.

### TECHNICAL FIELD

This application pertains to the field of communications technologies, and specifically relates to a method and an apparatus for determining a sidelink feedback resource, UE, and a storage medium.

### BACKGROUND

On a sidelink (sidelink, SL), a transmission node may access a channel by using load based equipment (Load based equipment, LBE) in an unlicensed frequency band, to transmit information.

In R16, introduction of a physical sidelink feedback channel (Physical Sidelink Feedback Channel, PSFCH) can improve reliability of a system and increase resource utilization in the system. Time-frequency domain resources of the PSFCH and a physical sidelink control channel (Physical Sidelink Control Channel, PSCCH) or a physical sidelink shared channel (Physical Sidelink Shared Channel, PSSCH) satisfy a predefined mapping relationship, with limited transmission flexibility. In an unlicensed frequency band, resource positions of the PSFCH that are determined according to the PSSCH/PSCCH and a predefined rule may not be available for PSFCH transmission due to presence of other systems that preempt resources.

When unicast information is transmitted on an SL, a receive end may be enabled to feed back CSI information, and a transmit end adjusts transmission parameters based on the CSI information. In the unlicensed frequency band, a resource for feeding back the CSI information also needs to be obtained through resource contention and preemption with other systems coexisting in the frequency band.

The SL feedback resource in the unlicensed frequency band has limited flexibility, and may not be available for feedback information transmission. Consequently, the following problems occur: Channel access efficiency of UE is low, and a requirement for occupying a channel bandwidth in the unlicensed frequency band cannot be satisfied.

### SUMMARY

Embodiments of this application provide a method and an apparatus for determining a sidelink feedback resource, UE, and a storage medium, to resolve a problem that channel access efficiency of SL UE in an unlicensed frequency band is low.

According to a first aspect, a method for determining a sidelink feedback resource is provided. The method includes:
determining, by first UE, a sidelink SL feedback resource, where the SL feedback resource is used by the first UE to send feedback information.

According to a second aspect, a method for determining a sidelink feedback resource is provided. The method includes:
detecting or receiving, by feedback information receiving UE, feedback information on a sidelink SL feedback resource, where the SL feedback resource is used by first UE to send the feedback information.

According to a third aspect, an apparatus for determining a sidelink feedback resource is provided. The apparatus includes:
a first determining unit, configured to determine a sidelink SL feedback resource, where the SL feedback resource is used by first UE to send feedback information.

According to a fourth aspect, an apparatus for determining a sidelink feedback resource is provided. The apparatus includes:
a first processing unit, configured to detect or receive feedback information on a sidelink SL feedback resource, where the SL feedback resource is used by first UE to send the feedback information.

According to a fifth aspect, UE is provided. The UE includes a processor, a memory, and a program or instructions stored in the memory and executable on the processor. When the program or instructions are executed by the processor, the steps of the method for determining a sidelink feedback resource according to the first aspect are implemented, or the steps of the method for determining a sidelink feedback resource according to the second aspect are implemented.

According to a sixth aspect, UE is provided. The UE includes a processor and a communications interface. The processor is configured to determine a sidelink SL feedback resource, where the SL feedback resource is used by first UE to send feedback information; or the processor is configured to detect or receive feedback information on a sidelink SL feedback resource, where the SL feedback resource is used by first UE to send the feedback information.

According to a seventh aspect, a network-side device is provided. The network-side device includes a processor, a memory, and a program or instructions stored in the memory and executable on the processor. When the program or instructions are executed by the processor, the steps of the method for determining a sidelink feedback resource according to the second aspect are implemented.

According to an eighth aspect, a network-side device is provided. The network-side device includes a processor and a communications interface. The processor is configured to detect or receive feedback information on a sidelink SL feedback resource, where the SL feedback resource is used by first UE to send the feedback information.

According to a ninth aspect, a readable storage medium is provided. The readable storage medium stores a program or instructions. When the program or instructions are executed by a processor, the steps of the method for determining a sidelink feedback resource according to the first aspect are implemented, or the steps of the method for determining a sidelink feedback resource according to the second aspect are implemented.

According to a tenth aspect, a chip is provided. The chip includes a processor and a communications interface. The communications interface is coupled to the processor. The processor is configured to run a program or instructions to implement the steps of the method for determining a sidelink feedback resource according to the first aspect, or implement the steps of the method for determining a sidelink feedback resource according to the second aspect.

According to an eleventh aspect, a computer program or program product is provided. The computer program or program product is stored in a non-volatile storage medium. The program or the program product is executed by at least one processor to implement the steps of the method for determining a sidelink feedback resource according to the first aspect, or implement the steps of the method for determining a sidelink feedback resource according to the second aspect.

In the embodiments of this application, the sidelink SL feedback resource is determined, the SL feedback resource is used by the first UE to send the feedback information, and the feedback resource is determined by the UE. Therefore, flexibility of resource scheduling is improved, and channel access efficiency of the UE can be improved. In this way, the feedback information is sent in an unlicensed frequency band, and system efficiency is improved.

### BRIEF DESCRIPTION OF DRAWINGS

FIG. 1 is a schematic diagram of a wireless communications system to which an embodiment of this application can be applied;
FIG. 2 is a first schematic flowchart of a method for determining a sidelink feedback resource according to an embodiment of this application;
FIG. 3 is a schematic diagram of a PSFCH with localized resources according to an embodiment of this application;
FIG. 4 is a schematic diagram of a PSFCH with distributed resources according to an embodiment of this application;
FIG. 5 is a first schematic diagram of a PSFCH and a PSSCH using same frequency domain resources according to an embodiment of this application;
FIG. 6 is a second schematic diagram of a PSFCH and a PSSCH using same frequency domain resources according to an embodiment of this application;
FIG. 7 is a schematic diagram of available resources of a PSFCH that are a part or all of PSSCH/PSCCH resources according to an embodiment of this application;
FIG. 8 is a first schematic diagram of a frequency domain resource spacing of an SL feedback resource according to an embodiment of this application;
FIG. 9 is a second schematic diagram of a frequency domain resource spacing of an SL feedback resource according to an embodiment of this application;
FIG. 10 is a schematic diagram of a structure of a PSFCH defined based on REs according to an embodiment of this application;
FIG. 11 is a second schematic flowchart of a method for determining a sidelink feedback resource according to an embodiment of this application;
FIG. 12 is a first schematic diagram of a structure of an apparatus for determining a sidelink feedback resource according to an embodiment of this application;
FIG. 13 is a second schematic diagram of a structure of an apparatus for determining a sidelink feedback resource according to an embodiment of this application;
FIG. 14 is a schematic diagram of a structure of a communications device according to an embodiment of this application;
FIG. 15 is a schematic diagram of a hardware structure of UE for implementing an embodiment of this application; and
FIG. 16 is a schematic diagram of a structure of a network-side device for implementing an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other systems than the NR system, for example, a 6th Generation (6th Generation, 6G) communications system.

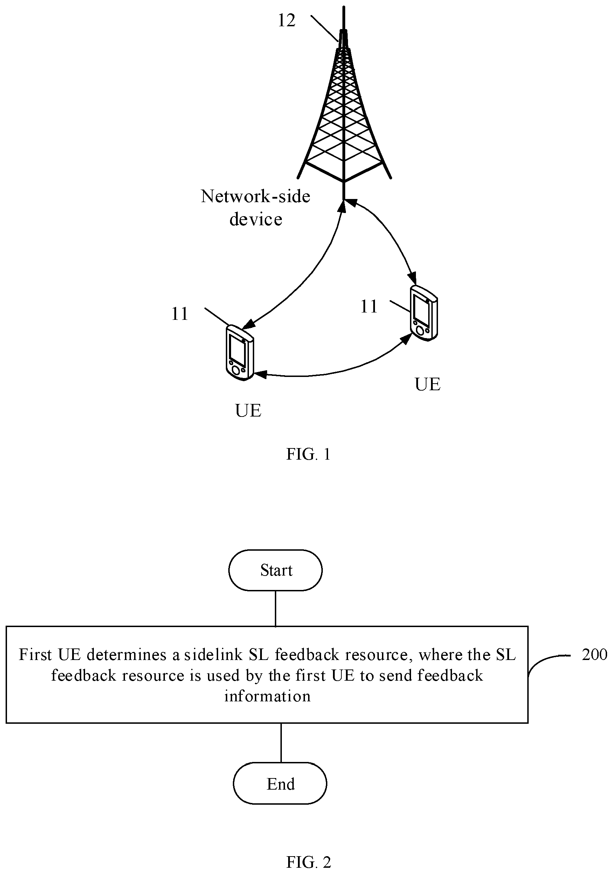

FIG. 1 is a schematic diagram of a wireless communications system to which an embodiment of this application may be applied. The wireless communications system includes UE 11 and a network-side device 12. The UE 11 may also be referred to as a terminal device or user equipment (User Equipment, UE). The UE 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicular user equipment (VLTE), or pedestrian user equipment (PUE). The wearable device includes a smart watch, a smart band, an earphone, glasses, or the like. It should be noted that a specific type of the UE 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

A method and an apparatus for determining a sidelink feedback resource, UE, and a storage medium provided in the embodiments of this application are hereinafter described in detail by using some embodiments and application scenarios thereof with reference to the accompanying drawings.

FIG. 2 is a first schematic flowchart of a method for determining a sidelink feedback resource according to an embodiment of this application. As shown in FIG. 2, the method includes the following step.

Step 200: First UE determines a sidelink SL feedback resource, where the SL feedback resource is used by the first UE to send feedback information.

Optionally, the first UE is a PSSCH or PSCCH receiving-side device, or a feedback-information transmitting-side device.

The first UE determines the sidelink SL feedback resource, where the SL feedback resource is used by the first UE to send the feedback information.

Optionally, the sidelink SL feedback resource is determined by at least one of a protocol predefinition, a preconfiguration, a configuration, and an indication.

It should be noted that the preconfiguration means a preconfiguration by a network-side device by using RRC signaling, or a preconfiguration by the UE by using RRC signaling; the configuration means a configuration by the network-side device by using RRC signaling, or a configuration by the UE by using RRC signaling; and the indication means an indication by at least one of a MAC CE, DCI, and SCI, where the network-side device provides the indication by using a MAC CE and/or DCI, and the UE provides the indication by using a MAC CE and/or SCI.

Optionally, the SL feedback resource includes at least one of the following:
a physical sidelink feedback channel PSFCH resource;
a channel state information (Channel State Information, CSI) reporting resource; and
a hybrid automatic repeat request (Hybrid Automatic Repeat Request, HARQ) resource.

In this embodiment of this application, the sidelink SL feedback resource is determined, the SL feedback resource is used by the first UE to send the feedback information, and the feedback resource is determined by the UE. Therefore, flexibility of resource scheduling is improved, and channel access efficiency of the UE can be improved. In this way, the feedback information is sent in an unlicensed frequency band, and system efficiency is improved.

Optionally, the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

That the SL feedback resource is a distributed resource may be understood as "the SL feedback resource is transmitted based on a distributed structure, or based on a resource allocated discontinuously in frequency domain".

The localized resource may be understood as a resource continuously allocated in frequency domain.

In some optional embodiments, in a case that the SL feedback resource is a distributed resource, the determining a sidelink SL feedback resource includes at least one of the following:
determining a bandwidth occupied by the SL feedback resource;
determining a frequency domain resource granularity occupied by the SL feedback resource;
determining a frequency domain resource spacing of the SL feedback resource; and
determining at least one of a frequency domain resource position, a frequency domain resource size, an interlace index, and an interlace quantity of the SL feedback resource.

Optionally, the bandwidth occupied by the SL feedback resource includes at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

The bandwidth of the PSCCH or the bandwidth of the PSSCH is the bandwidth of the PSCCH or the PSSCH corresponding to the feedback information, and indicates that a frequency domain range between a smallest resource number and a largest resource number is available.

Considering a position of successful PSSCH or PSCCH access, a probability of successful access of the feedback information is also higher. In an implementation, the bandwidth occupied by the SL feedback resource is a subset of frequency domain of the PSCCH or a subset of frequency domain of the PSSCH.

A resource block (Resource Block, RB) set is a listen before talk (Listen before talk, LBT) bandwidth. A plurality of RB sets refer to a plurality of LBT bandwidths, which may be a wideband operation.

The RB set is a minimum detection granularity defined in an unlicensed frequency band.

Optionally, the frequency domain resource granularity occupied by the SL feedback resource includes at least one of the following:
one physical resource block (Physical Resource Block, PRB);
M physical resource blocks PRBs, where M is a protocol-predefined, preconfigured, or configured parameter;
a subchannel size;
a resource block group (Resource Block Group, RBG); and
one or more resource elements (Resource Element, RE) REs.

A physical resource block (Physical Resource Block, PRB) may be understood as a structure of an interlace.

For example, at predefined 15 kHz, there are 10 interlaces, and within each interlace, one PRB is occupied; at predefined 30 kHz, there are 5 interlaces, and within each interlace, one PRB is occupied.

Alternatively, a total of two PRBs are used for transmission, at start RB and end RB positions of the bandwidth.

M PRB(s), where M is a protocol predefined, preconfigured, or configured parameter, for example, M = 6 RBs.

Optionally, the RBG satisfies at least one of the following:
an RBG size is a protocol-predefined, preconfigured, or configured parameter;
an RBG quantity is a protocol-predefined, preconfigured, or configured parameter;
an RBG quantity is obtained based on a quantity of BWPs or RB sets; and
an RBG quantity is obtained based on a carrier bandwidth of a BWP or an RB set.

Optionally, the one or more resource elements REs satisfy at least one of the following:
RE density is related to a subcarrier spacing (subcarrier spacing, SCS);
a spacing between REs is related to an SCS;
being used to predefined an interlace quantity in a protocol, or preconfigure an interlace quantity, or configure an interlace quantity, where
for example, when SCS = 15 kHz, 10×12 interlaces exist, and a minimum scheduling unit for each interlace is one RE; and
a quantity of REs in one or more resource blocks is one or more, where the quantity of REs in the one or more resource blocks is a protocol-predefined, or preconfigured, or configured value.

Optionally, the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

Optionally, the frequency domain resource position, the frequency domain resource size, the interlace index, or the interlace quantity of the SL feedback resource satisfies at least one of the following:
a protocol-predefined, preconfigured, or configured value, and/or a parameter indicated by at least one of a MAC CE, DCI, and SCI; and
a value related to the SCS.

Optionally, the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a parameter indicated by at least one of a media access control control element MAC CE, downlink control information DCI, and sidelink control information SCI; and
the at least one of the frequency domain resource position, the frequency domain resource size, the interlace index, and the interlace quantity of the SL feedback resource is a parameter randomly selected within a preconfigured range.

For example, a gNB configures a plurality of available interlace indexes for RX UE by using RRC signaling, and optionally further indicates, by using DCI, an interlace index to be used by the RX UE for transmission of the PSFCH.

Optionally, the slot number or the slot quantity satisfies:
a remainder on diving S_num by I_num is equal to A (that is, S_num mod (I_num) = A), where S_num is the slot number or the slot quantity;
A is a preconfigured value or a value obtained based on the UE ID; and
I_num is a protocol-predefined, preconfigured, or configured value, or I_num is related to the interlace quantity.

For example, I_num = Interlace number, or the interlace number is an integer multiple of I_num, or I_num is an integer multiple of the interlace number. For the second relationship, a PSFCH corresponding to a plurality of interlaces may be sent in a candidate slot.

Optionally, the UE ID is at least one of the following:
an ID of the first UE;
an ID of feedback-information receiving-side device;
an ID of UE sending the PSCCH and/or the PSSCH corresponding to the feedback information; and
an ID of scheduling UE.

In some optional embodiments, in a case that the SL feedback resource is a localized resource, the determining a sidelink SL feedback resource includes at least one of the following:
determining a bandwidth occupied by the SL feedback resource;
determining a frequency domain resource granularity occupied by the SL feedback resource; and
determining a frequency domain resource position and/or a frequency domain resource size of the SL feedback resource.

The frequency domain resource position includes a frequency domain resource start position and/or a frequency domain resource end position.

For understanding of the bandwidth occupied by the SL feedback resource and the frequency domain resource granularity occupied by the SL feedback resource, refer to the foregoing embodiments. Details are not described herein again.

Optionally, the determining a frequency domain resource position and/or a frequency domain resource size of the SL feedback resource includes:
determining the frequency domain resource position and/or the frequency domain resource size of the SL feedback resource based on a slot number or a slot quantity;
determining the frequency domain resource position and/or the frequency domain resource size of the SL feedback resource based on a UE ID;
determining that the frequency domain resource position and/or the frequency domain resource size of the SL feedback resource are/is a parameter predefined, determined according to a preset rule, preconfigured, or configured, and/or a parameter indicated by at least one of a MAC CE, DCI, and SCI; and
determining that the frequency domain resource position and/or the frequency domain resource size of the SL feedback resource are/is a parameter randomly selected within a preconfigured range.

That the frequency domain resource position of the SL feedback resource is a parameter randomly selected within a preconfigured range includes at least one of the following:
the frequency domain resource start position is randomly selected within a preconfigured range;
a length occupied by the frequency domain resource is randomly selected within a preconfigured range; and
the frequency domain resource end position is randomly selected within a preconfigured range.

Optionally, the slot number or the slot quantity satisfies:
a remainder on diving S_num by I_num is equal to A (that is, S_num mod (I_num) = A), where S_num is the slot number or the slot quantity;
A is a preconfigured value or a value obtained based on the UE ID; and
I_num is a protocol-predefined, preconfigured, or configured value, or I_num is related to the interlace quantity.

Optionally, the UE ID is at least one of the following:
an ID of the first UE;
an ID of feedback-information receiving-side device;
an ID of UE sending the PSCCH and/or the PSSCH corresponding to the feedback information; and
an ID of scheduling UE.

In some other optional embodiments, that the SL feedback resource is determined based on resource allocation or a resource structure of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH;
a resource structure of the SL feedback resource is the same as the resource structure of the PSCCH and/or the PSSCH; and
in a case that a resource of the PSCCH and/or the PSSCH is a localized resource, the SL feedback resource is a localized resource or a distributed resource, where the SL feedback resource being a localized resource or a distributed resource is determined by a preconfiguration, a configuration, or an indication.

In an implementation, in a case that the resource allocation mode used by the PSCCH/PSSCH is distributed resource allocation, the SL feedback resource uses distributed resource allocation. Alternatively, in a case that a resource used by the PSCCH/PSSCH is a distributed resource, the SL feedback resource is a distributed resource.

In an implementation, in a case that the resource allocation mode used by the PSCCH/PSSCH is localized resource allocation, the SL feedback resource uses localized resource allocation. Alternatively, in a case that a resource used by the PSCCH/PSSCH is a localized resource, the SL feedback resource is a localized resource.

Optionally, if the PSSCH/PSCCH uses continuous resource allocation, that is, localized resource allocation, the SL feedback resource and the PSSCH/PSCCH have a same frequency domain range.

Optionally, if the PSSCH/PSCCH uses interlaced based resource allocation, that is, distributed resource allocation, the SL feedback resource and the PSSCH/PSCCH have a same frequency domain range.

Optionally, if the PSSCH/PSCCH uses interlaced based resource allocation, the SL feedback resource is within a frequency domain range of the PSSCH/PSCCH.

In an implementation, in a case that a resource of the PSCCH and/or PSSCH is a localized resource, the SL feedback resource may be a localized resource or a distributed resource. Optionally, whether the SL feedback resource is a localized resource or a distributed resource is determined by a preconfiguration, a configuration, or an indication. The indication may be a MAC CE indication, and/or a DCI indication, and/or an SCI indication.

In this embodiment of this application, the sidelink SL feedback resource is determined, the SL feedback resource is used by the first UE to send the feedback information, the feedback resource is determined by the UE, and the feedback resource may be a distributed resource or a localized resource, or allocation of the feedback resource is determined based on resource allocation of the PSCCH and/or PSSCH. Therefore, channel access efficiency of the UE can be improved. In this way, the feedback information is sent in the unlicensed frequency band, and system efficiency is improved.

In some optional embodiments, a sequence of the feedback information satisfies at least one of the following:
the feedback information is transmitted by using a sequence with a sequence length of N; and
the feedback information is detected by feedback-information receiving-side device based on a predefined or preconfigured sequence length, where
a value of N satisfies one of the following:
   the value is a predefined or preconfigured value;
   the value is related to an SCS configuration; and
   the value is related to an available resource.

The resource of the feedback information is reflected by the sequence of the feedback information.

In an implementation, the feedback information is transmitted by using a sequence with a sequence length of N, and a value of N is related to an SCS configuration. For example, 15 kHz corresponds to N1, and 30 kHz corresponds to N2. In interlaced based resource allocation, PSFCH information defined by N1 or N2 can cover a part (10 PRBs or 5 PRBs) of frequency domain resources, and a capacity of the PSFCH information can be expanded.

In an implementation, the feedback information is transmitted by using a sequence with a sequence length of N, and a length of N is related to an available resource. In this case, the sequence length first matches a frequency domain resource that possibly changes, to generate the sequence. For example, for a resource with an interlace of 10 PRBs, the sequence length is length N1 = 10×m, and for a resource with an interlace of 11 PRBs, the sequence length is length N1 = 11×m. A sequence of 10×m to (11×m-1) is a repetition of a sequence of 9×m to (10×m-1).

In an implementation, the feedback information is detected by feedback-information receiving-side device based on a predefined or preconfigured sequence length. For example, if the sequence length of the feedback information is 11×m and a predefined detection sequence length is 10×m, a feedback information receive end detects the sequence based on 10×m. Sequence generation at a transmit end and sequence detection at a receive end need to be defined separately in this method.

In this embodiment of this application, the sidelink SL feedback resource is determined, the SL feedback resource is used by the first UE to send the feedback information, and the SL feedback resource is determined by the sequence of the feedback information. Therefore, channel access efficiency of the UE can be improved. In this way, the feedback information is sent in the unlicensed frequency band, and system efficiency is improved.

In some optional embodiments, a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

In an implementation, a feedback information sequence is mapped from a lowest PRB of a frequency domain resource. Optionally, if the sequence is mapped to PRB 1 to PRB n, and there are N PRBs remaining in the frequency domain resource, a sequence within the remaining frequency domain resource is a repetition of the sequence of the first n PRBs. N may be greater than, equal to, or less than n. If N > n, the sequence is a plurality of repetitions of the sequence of the first n PRBs, and the repetitions may be complete or partial repetitions. If N < n, the sequence is a partial repetition of the sequence of the first n PRBs. If N = n, the sequence is a repetition of the sequence of the first n PRBs.

In an implementation, based on a case that the PSFCH occupies one PRB and that the remaining PRBs are repetitions, a feedback information sequence on each PRB is a repetition of the feedback information sequence.

In an implementation, the resource mapping of the feedback information is related to an interlace index. For example, at 15 kHz, interlaces 0 to 5 correspond to 11 PRBs, interlaces 6 to 9 correspond to 10 PRBs, and for interlaces 0 to 5, a predefined PSFCH length N1 is mapped, and the last PRB is a repeated mapping of the tenth PRB.

In this embodiment of this application, the sidelink SL feedback resource is determined, and the mapping of the feedback information sequence is determined. Therefore, channel access efficiency of the UE can be improved. In this way, the feedback information is sent in the unlicensed frequency band, and system efficiency is improved.

The method for determining a sidelink feedback resource according to the embodiments of this application is further described below by using some examples.

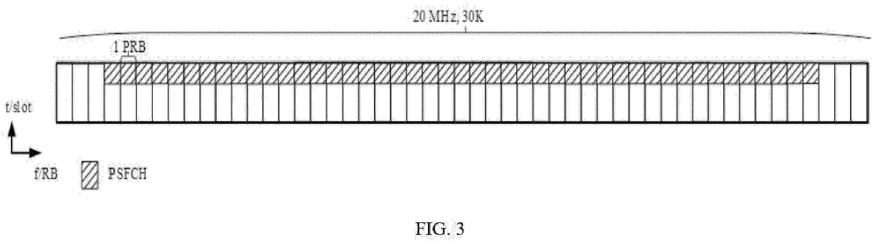

FIG. 3 is a schematic diagram of a PSFCH with localized resources according to an embodiment of this application. As shown in FIG. 3, the PSFCH uses continuous resource allocation, and FIG. 3 shows that at 20 MHz and at 30 kHz, the PSFCH occupies 45 PRBs starting from the fourth PRB.

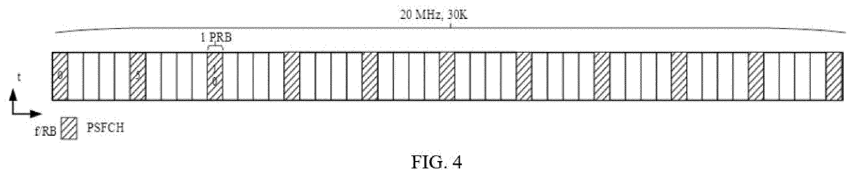

FIG. 4 is a schematic diagram of a PSFCH with distributed resources according to an embodiment of this application. As shown in FIG. 4, the PSFCH uses interlaced based resource allocation, and FIG. 4 shows that at 20 MHz and 30 kHz, the PSFCH uses interlace 0 to transmit information.

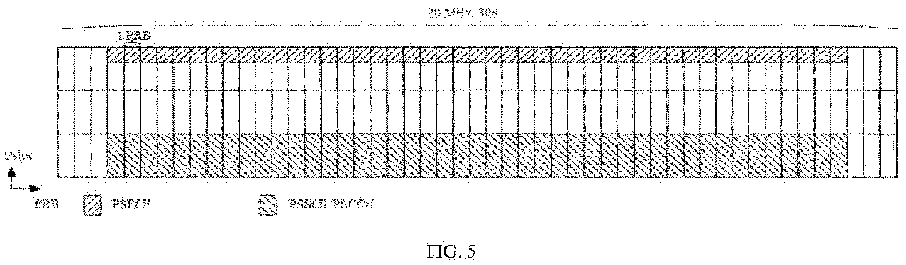

FIG. 5 is a first schematic diagram of a PSFCH and a PSSCH using same frequency domain resources according to an embodiment of this application. As shown in FIG. 5, the PSFCH has a same frequency domain range as the PSSCH/PSCCH if the PSSCH/PSCCH uses continuous resource allocation.

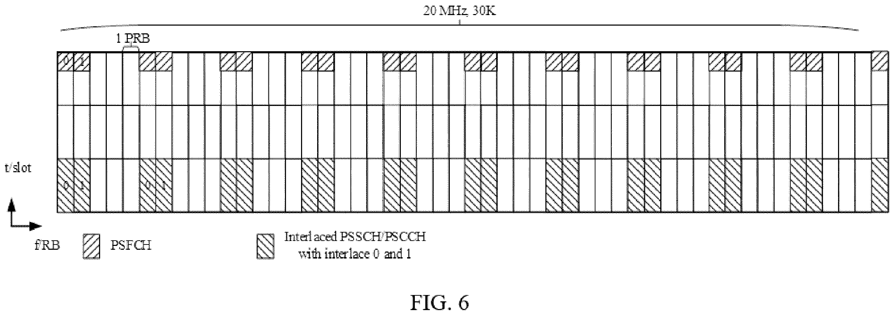

FIG. 6 is a second schematic diagram of a PSFCH and a PSSCH using same frequency domain resources according to an embodiment of this application. As shown in FIG. 6, the PSFCH has a same frequency domain range as the PSSCH/PSCCH if the PSSCH/PSCCH uses interlaced based resource allocation.

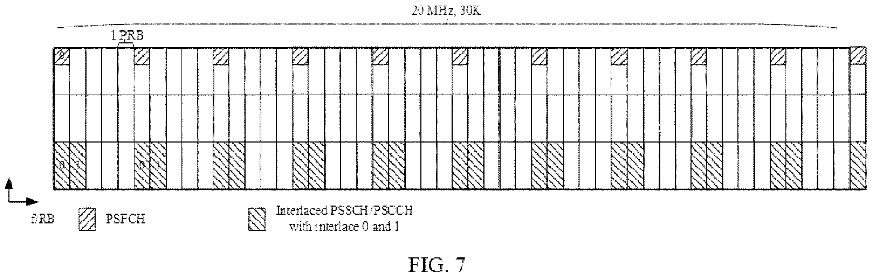

FIG. 7 is a schematic diagram of available resources of a PSFCH that are a part or all of PSSCH/PSCCH resources according to an embodiment of this application. If the PSSCH uses interlaced based resource allocation, the available frequency domain resources of the PSFCH are within a frequency domain resource range of the PSSCH. As shown in FIG. 7, the PSSCH/PSCCH occupies interlace 0 and interlace 1, and the PSFCH occupies interlace 0 for sending.

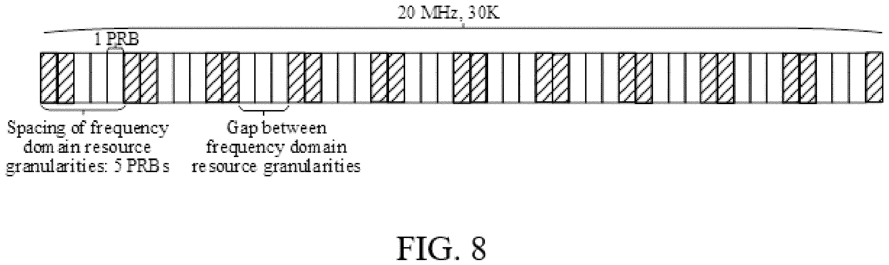

FIG. 8 is a first schematic diagram of a frequency domain resource spacing of an SL feedback resource according to an embodiment of this application.

If the frequency domain resource spacing is a gap between two adjacent frequency domain resource granularities, resource occupancy of a PSFCH in frequency domain when the frequency domain resource spacing is defined as 3 PRBs and a scheduling granularity is defined as 2 PRBs is shown in FIG. 8.

If the frequency domain resource spacing is a spacing of two adjacent frequency domain resource granularities, resource occupancy of a PSFCH in frequency domain when the frequency domain resource spacing is defined as 5 PRBs and a scheduling granularity is defined as 2 PRBs is shown in FIG. 8.

Defining the gap between frequency domains facilitates IBE control/reduction.

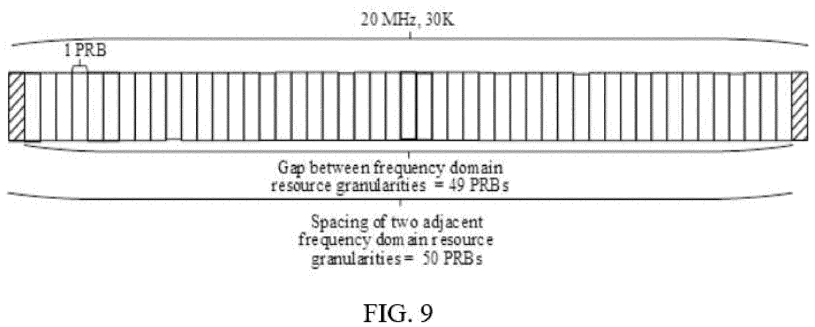

FIG. 9 is a second schematic diagram of a frequency domain resource spacing of an SL feedback resource according to an embodiment of this application.

If the frequency domain resource spacing is a gap between two adjacent frequency domain resource granularities, resource occupancy of a PSFCH in frequency domain when the frequency domain resource spacing is defined as 49 PRBs and 2 PRBs are scheduled is shown in FIG. 9.

If the frequency domain resource spacing is a spacing of two adjacent frequency domain resource granularities, resource occupancy of a PSFCH in frequency domain when the frequency domain resource spacing is defined as 50 PRBs and 2 PRBs are scheduled is shown in FIG. 9.

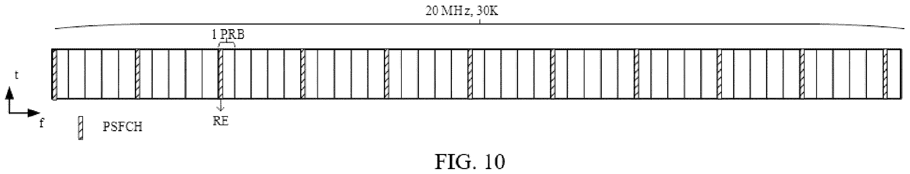

FIG. 10 is a schematic diagram of a structure of a PSFCH defined based on REs according to an embodiment of this application.

The PSFCH uses an RE based interlace structure. The PSFCH occupies one or more REs in a PRB, and the REs may use continuous or discontinuous resource allocation. If one RE is occupied in a PRB, resources of one PSFCH are shown in FIG. 10.

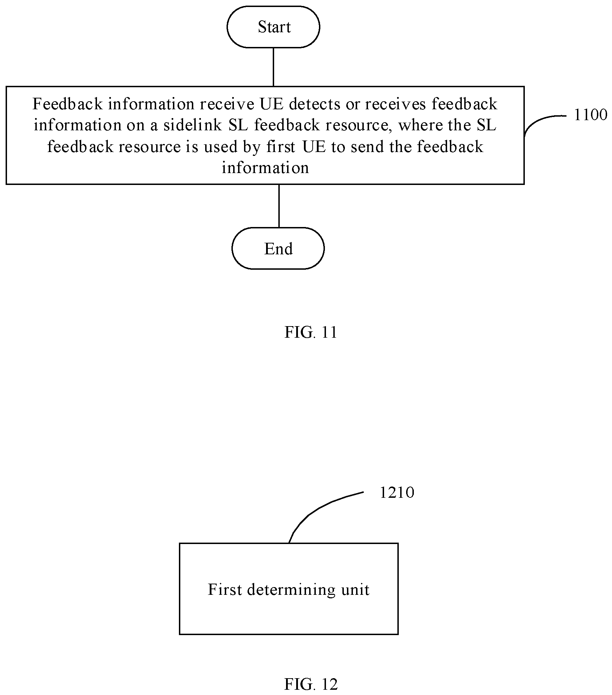

FIG. 11 is a second schematic flowchart of a method for determining a sidelink feedback resource according to an embodiment of this application. As shown in FIG. 11, the method for determining a sidelink feedback resource includes the following step.

Step 1100: A feedback-information receiving-side device detects or receives feedback information on a sidelink SL feedback resource, where the SL feedback resource is used by first UE to send the feedback information.

Optionally, the feedback-information receiving-side device may be second UE, scheduling UE, or a network-side device.

The second UE is a PSSCH or PSCCH transmitting-side device, or a feedback-information receiving-side device.

Optionally, the scheduling UE may be header UE header UE for controlling data transmission and reception of a pair of UEs.

Optionally, the scheduling UE may be a device sending a PSSCH and/or PSCCH, or a device controlling UE or header UE to send a PSSCH and/or PSCCH, or a device authorizing UE to send a PSSCH and/or PSCCH.

Optionally, the feedback-information receiving-side device determines the sidelink SL feedback resource by using at least one of a protocol predefinition, a preconfiguration, a configuration, and an indication.

It should be noted that the preconfiguration means a pre configuration by a network-side device by using RRC signaling, or a preconfiguration by the UE by using RRC signaling; the configuration means a configuration by the network-side device by using RRC signaling, or a configuration by the UE by using RRC signaling; and the indication means an indication by at least one of a MAC CE, DCI, and SCI, where the network-side device provides the indication by using a MAC CE and/or DCI, and the UE provides the indication by using a MAC CE and/or SCI.

In this embodiment of this application, the feedback-information receiving-side device detects or receives the feedback information on the sidelink SL feedback resource. Therefore, flexibility of resource scheduling is improved, and channel access efficiency of the UE can be improved. In this way, the feedback information is sent in an unlicensed frequency band, and system efficiency is improved.

Optionally, the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

Optionally, in a case that the SL feedback resource is a distributed resource, the sidelink SL feedback resource includes at least one of the following:
a bandwidth occupied by the SL feedback resource;
a frequency domain resource granularity occupied by the SL feedback resource;
a frequency domain resource spacing of the SL feedback resource; and
at least one of a frequency domain resource position, a frequency domain resource size, an interlace index, and an interlace quantity of the SL feedback resource.

Optionally, in a case that the SL feedback resource is a localized resource, the sidelink SL feedback resource includes at least one of the following:
a bandwidth occupied by the SL feedback resource;
a frequency domain resource granularity occupied by the SL feedback resource; and
a frequency domain resource position and/or a frequency domain resource size of the SL feedback resource.

Optionally, the bandwidth occupied by the SL feedback resource includes at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

Optionally, the frequency domain resource granularity occupied by the SL feedback resource includes at least one of the following:
one physical resource block PRB;
M physical resource blocks PRBs, where M is a protocol-predefined, preconfigured, or configured parameter;
a subchannel size;
a resource block group RBG; and
one or more resource elements REs.

Optionally, the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

Optionally, the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a parameter indicated by at least one of a media access control control element MAC CE, downlink control information DCI, and sidelink control information SCI; and
the at least one of the frequency domain resource position, the frequency domain resource size, the interlace index, and the interlace quantity of the SL feedback resource is a parameter randomly selected within a preconfigured range.

Optionally, the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a parameter predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

Optionally, the RBG satisfies at least one of the following:
an RBG size is a protocol-predefined, preconfigured, configured, or indicated parameter;
an RBG quantity is a protocol-predefined, preconfigured, or configured parameter;
an RBG quantity is obtained based on a quantity of BWPs or RB sets; and an RBG quantity is obtained based on a carrier bandwidth of a BWP or an RB set.

Optionally, the one or more resource elements REs satisfy at least one of the following:
RE density is related to a subcarrier spacing SCS;
a spacing between REs is related to an SCS;
being used to predefine an interlace quantity in a protocol, or preconfigure an interlace quantity, or configure an interlace quantity; and
a quantity of REs in one or more resource blocks is one or more, where the quantity of REs in the one or more resource blocks is a protocol-predefined, or preconfigured, or configured value.

Optionally, the slot number or the slot quantity satisfies:
a remainder on diving S_num by I_num is equal to A (that is, S_num mod (I_num) = A), where S_num is the slot number or the slot quantity;
A is a preconfigured value or a value obtained based on the UE ID; and
I_num is a protocol-predefined, preconfigured, or configured value, or I_num is related to the interlace quantity.

Optionally, the UE ID is at least one of the following:
an ID of the first UE;
an ID of the feedback-information receiving-side device;
an ID of UE sending the PSCCH and/or the PSSCH corresponding to the feedback information; and
an ID of scheduling UE.

Optionally, that the SL feedback resource is determined based on resource allocation or a resource structure of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH;
a resource structure of the SL feedback resource is the same as the resource structure of the PSCCH and/or the PSSCH; and
in a case that a resource of the PSCCH and/or the PSSCH is a localized resource, the SL feedback resource is a localized resource or a distributed resource, where the SL feedback resource being a localized resource or a distributed resource is determined by a predefinition, a preconfiguration, a configuration, or an indication.

In this embodiment of this application, the feedback-information receiving-side device detects or receives the feedback information on the sidelink SL feedback resource, where the SL feedback resource is used by the first UE to send the feedback information, and the SL feedback resource may be a distributed resource or a localized resource, or is determined based on resource allocation or the resource structure of the PSCCH and/or the PSSCH. Therefore, channel access efficiency of the UE can be improved. In this way, the feedback information is sent in the unlicensed frequency band, and system efficiency is improved.

Optionally, a sequence of the feedback information satisfies at least one of the following:
the feedback information is transmitted by using a sequence with a sequence length of N; and
the feedback information is detected by feedback-information receiving-side device based on a predefined or preconfigured sequence length, where
a value of N satisfies one of the following:
   the value is a predefined or preconfigured value;
   the value is related to an SCS configuration; and
   the value is related to an available resource.

Optionally, a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

The structure of the SL feedback resource in this embodiment of this application is the same for the feedback-information receiving-side device and the first UE. Therefore, refer to related descriptions in the foregoing embodiment. Details are not described herein again.

It should be noted that the method for determining a sidelink feedback resource according to this embodiment of this application may be performed by an apparatus for determining a sidelink feedback resource, or a control module configured to perform the method for determining a sidelink feedback resource in an apparatus for determining a sidelink feedback resource. An apparatus for determining a sidelink feedback resource according to an embodiment of this application is described by using an example in which the method for determining a sidelink feedback resource is performed by the apparatus for determining a sidelink feedback resource in this embodiment of this application.

FIG. 12 is a schematic diagram of a structure of an apparatus for determining a sidelink feedback resource according to an embodiment of this application. As shown in FIG. 12, the apparatus includes:
a first determining unit 1210, configured to determine a sidelink SL feedback resource, where the SL feedback resource is used by first UE to send feedback information.

In this embodiment of this application, the sidelink SL feedback resource is determined, the SL feedback resource is used by the first UE to send the feedback information, and the feedback resource is determined by the UE. Therefore, flexibility of resource scheduling is improved, and channel access efficiency of the UE can be improved. In this way, the feedback information is sent in an unlicensed frequency band, and system efficiency is improved.

Optionally, the sidelink SL feedback resource satisfies at least one of the following:
the SL feedback resource is a distributed resource;
the SL feedback resource is a localized resource; and
the SL feedback resource is determined based on resource allocation of a physical sidelink control channel PSCCH and/or a physical sidelink shared channel PSSCH.

Optionally, in a case that the SL feedback resource is a distributed resource, the first determining unit is configured to perform at least one of the following:
determining a bandwidth occupied by the SL feedback resource;
determining a frequency domain resource granularity occupied by the SL feedback resource;
determining a frequency domain resource spacing of the SL feedback resource; and
determining at least one of a frequency domain resource position, a frequency domain resource size, an interlace index, and an interlace quantity of the SL feedback resource.

Optionally, in a case that the SL feedback resource is a localized resource, the first determining unit is configured to perform at least one of the following:
determining a bandwidth occupied by the SL feedback resource;
determining a frequency domain resource granularity occupied by the SL feedback resource; and
determining a frequency domain resource position and/or a frequency domain resource size of the SL feedback resource.

Optionally, the bandwidth occupied by the SL feedback resource includes at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

Optionally, the frequency domain resource granularity occupied by the SL feedback resource includes at least one of the following:
one physical resource block PRB;
M physical resource blocks PRBs, where M is a protocol-predefined, preconfigured, or configured parameter;
a subchannel size;
a resource block group RBG; and
one or more resource elements REs.

Optionally, the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

Optionally, the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a value indicated by a media access control control element MAC CE, downlink control information DCI, or sidelink control information SCI; and
the at least one of the frequency domain resource position, the frequency domain resource size, the interlace index, and the interlace quantity of the SL feedback resource is a parameter randomly selected within a preconfigured range.

Optionally, the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a value predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

Optionally, the RBG satisfies at least one of the following:
an RBG size is a protocol-predefined, preconfigured, or configured parameter;
an RBG quantity is a protocol-predefined, preconfigured, or configured parameter;
an RBG quantity is obtained based on a quantity of BWPs or RB sets; and
an RBG quantity is obtained based on a carrier bandwidth of a BWP or an RB set.

Optionally, the one or more resource elements REs satisfy at least one of the following:
RE density is related to a subcarrier spacing SCS;
a spacing between REs is related to an SCS;
being used to predefine an interlace quantity in a protocol, or preconfigure an interlace quantity, or configure an interlace quantity; and
a quantity of REs in one or more resource blocks is one or more, where the quantity of REs in the one or more resource blocks is a protocol-predefined, or preconfigured, or configured value.

Optionally, the slot number or the slot quantity satisfies:
a remainder on diving S_num by I_num is equal to A (that is, S_num mod (I_num) = A), where S_num is the slot number or the slot quantity;
A is a preconfigured value or a value obtained based on the UE ID; and
I_num is a protocol-predefined, preconfigured, or configured value, or I_num is related to the interlace quantity.

Optionally, the UE ID is at least one of the following:
an ID of the first UE;
an ID of feedback-information receiving-side device;
an ID of UE sending the PSCCH and/or the PSSCH corresponding to the feedback information; and
an ID of scheduling UE.

Optionally, that the SL feedback resource is determined based on resource allocation of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH; and
in a case that a resource of the PSCCH and/or the PSSCH is a localized resource, the SL feedback resource is a localized resource or a distributed resource, where the SL feedback resource being a localized resource or a distributed resource is determined by a preconfiguration, a configuration, or an indication.

Optionally, a sequence of the feedback information satisfies at least one of the following:
the feedback information is transmitted by using a sequence with a sequence length of N; and
the feedback information is detected by feedback-information receiving-side device based on a predefined or preconfigured sequence length, where
a value of N satisfies one of the following:
   the value is a predefined or preconfigured value;
   the value is related to an SCS configuration; and
   the value is related to an available resource.

Optionally, a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

In this embodiment of this application, the sidelink SL feedback resource is determined, the SL feedback resource is used by the first UE to send the feedback information, the feedback resource is determined by the UE, and the feedback resource may be a distributed resource or a localized resource, or allocation of the feedback resource is determined based on resource allocation of the PSCCH and/or PSSCH. Therefore, channel access efficiency of the UE can be improved. In this way, the feedback information is sent in the unlicensed frequency band, and system efficiency is improved.

The apparatus for determining a sidelink feedback resource in this embodiment of this application may be an apparatus, an apparatus with an operating system, or an electronic device, or may be a component, an integrated circuit, or a chip in UE. The apparatus or the electronic device may be a mobile terminal, or may be a nonmobile terminal. For example, the mobile terminal may include but is not limited to the foregoing illustrated type of the UE 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The apparatus for determining a sidelink feedback resource according to this embodiment of this application can implement each process implemented by the method embodiments in FIG. 2 to FIG. 10, with the same technical effect achieved. To avoid repetition, details are not described herein again.

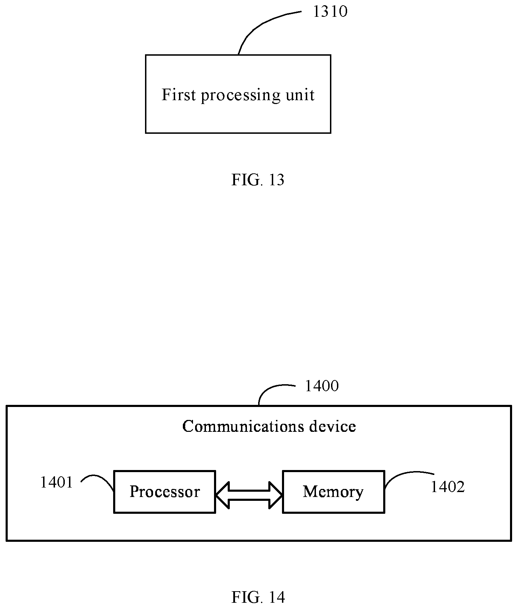

FIG. 13 is a second schematic diagram of a structure of an apparatus for determining a sidelink feedback resource according to an embodiment of this application. As shown in FIG. 13, the apparatus includes:
a first processing unit 1310, configured to detect or receive feedback information on a sidelink SL feedback resource, where the SL feedback resource is used by first UE to send the feedback information.

Optionally, the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

Optionally, in a case that the SL feedback resource is a distributed resource, the sidelink SL feedback resource includes at least one of the following:
a bandwidth occupied by the SL feedback resource;
a frequency domain resource granularity occupied by the SL feedback resource;
a frequency domain resource spacing of the SL feedback resource; and
at least one of a frequency domain resource position, a frequency domain resource size, an interlace index, and an interlace quantity of the SL feedback resource.

Optionally, in a case that the SL feedback resource is a localized resource, the sidelink SL feedback resource includes at least one of the following:
a bandwidth occupied by the SL feedback resource;
a frequency domain resource granularity occupied by the SL feedback resource; and
a frequency domain resource position and/or a frequency domain resource size of the SL feedback resource.

Optionally, the bandwidth occupied by the SL feedback resource includes at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

Optionally, the frequency domain resource granularity occupied by the SL feedback resource includes at least one of the following:
one physical resource block PRB;
M physical resource blocks PRBs, where M is a protocol-predefined, preconfigured, or configured parameter;
a subchannel size;
a resource block group RBG; and
one or more resource elements REs.

Optionally, the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

Optionally, the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a parameter indicated by at least one of a media access control control element MAC CE, downlink control information DCI, and sidelink control information SCI; and
the at least one of the frequency domain resource position, the frequency domain resource size, the interlace index, and the interlace quantity of the SL feedback resource is a parameter randomly selected within a preconfigured range.

Optionally, the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a parameter predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

Optionally, the RBG satisfies at least one of the following:
an RBG size is a protocol-predefined, preconfigured, configured, or indicated parameter;
an RBG quantity is a protocol-predefined, preconfigured, or configured parameter;
an RBG quantity is obtained based on a quantity of BWPs or RB sets; and
an RBG quantity is obtained based on a carrier bandwidth of a BWP or an RB set.

Optionally, the one or more resource elements REs satisfy at least one of the following:
RE density is related to a subcarrier spacing SCS;
a spacing between REs is related to an SCS;
being used to predefine an interlace quantity in a protocol, or preconfigure an interlace quantity, or configure an interlace quantity; and
a quantity of REs in one or more resource blocks is one or more, where the quantity of REs in the one or more resource blocks is a protocol-predefined, or preconfigured, or configured value.

Optionally, the slot number or the slot quantity satisfies:
a remainder on diving S_num by I_num is equal to A (that is, S_num mod (I_num) = A), where S_num is the slot number or the slot quantity;
A is a preconfigured value or a value obtained based on the UE ID; and
I_num is a protocol-predefined, preconfigured, or configured value, or I_num is related to the interlace quantity.

Optionally, the UE ID is at least one of the following:
an ID of the first UE;
an ID of the feedback-information receiving-side device;
an ID of UE sending the PSCCH and/or the PSSCH corresponding to the feedback information; and
an ID of scheduling UE.

Optionally, that the SL feedback resource is determined based on resource allocation or a resource structure of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH;
a resource structure of the SL feedback resource is the same as the resource structure of the PSCCH and/or the PSSCH; and
in a case that a resource of the PSCCH and/or the PSSCH is a localized resource, the SL feedback resource is a localized resource or a distributed resource, where the SL feedback resource being a localized resource or a distributed resource is determined by a predefinition, a preconfiguration, a configuration, or an indication.

Optionally, a sequence of the feedback information satisfies at least one of the following:
the feedback information is transmitted by using a sequence with a sequence length of N; and
the feedback information is detected by feedback-information receiving-side device based on a predefined or preconfigured sequence length, where
a value of N satisfies one of the following:
   the value is a predefined or preconfigured value;
   the value is related to an SCS configuration; and
   the value is related to an available resource.

Optionally, a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

In this embodiment of this application, the feedback information is detected or received on the sidelink SL feedback resource, and the SL feedback resource is used by the first UE to send the feedback information. Therefore, flexibility of resource scheduling is improved, and channel access efficiency of the UE can be improved. In this way, system efficiency is improved.

Optionally, as shown in FIG. 14, an embodiment of this application further provides a communications device 1400, including a processor 1401, a memory 1402, and a program or instructions stored in the memory 1402 and executable on the processor 1401. For example, when the communications device 1400 is UE, and the program or instructions are executed by the processor 1401, each process of the foregoing embodiment of the method for determining a sidelink feedback resource is implemented, with the same technical effect achieved. To avoid repetition, details are not described herein again.

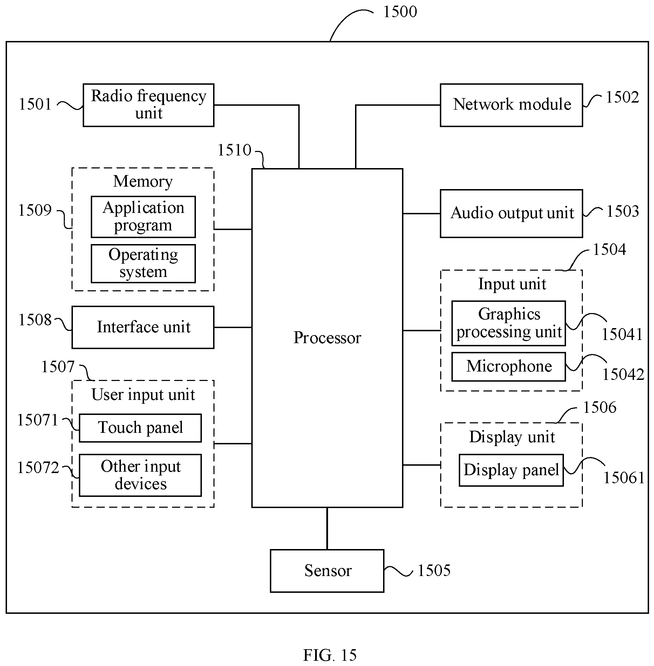

An embodiment of this application further provides UE, including a processor and a communications interface. The processor is configured to determine a sidelink SL feedback resource, where the SL feedback resource is used by first UE to send feedback information. The UE embodiment corresponds to the foregoing UE-side method embodiment, and each implementation process and implementation of the foregoing method embodiment can be applied to the UE embodiment, with the same technical effect achieved. Specifically, FIG. 15 is a schematic diagram of a hardware structure of UE for implementing an embodiment of this application.

The UE 1500 includes but is not limited to at least some components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

A person skilled in the art may understand that the UE 1500 may further include a power supply (for example, a battery) supplying power to all components. The power supply may be logically connected to the processor 1510 through a power management system. In this way, functions such as charge management, discharge management, and power consumption management are implemented by using the power management system. The UE structure shown in FIG. 15 does not constitute a limitation on the UE. The UE may include more or fewer components than those shown in the figure, or some components are combined, or component arrangements are different. Details are not described herein again.

It should be understood that, in this embodiment of this application, the input unit 1504 may include a graphics processing unit (Graphics Processing Unit, GPU) 15041 and a microphone 15042. The graphics processing unit 15041 processes image data of a still picture or video obtained by an image capture apparatus (such as a camera) in a video capture mode or an image capture mode. The display unit 1506 may include a display panel 15061, and the display panel 15061 may be configured in a form of a liquid crystal display, an organic light-emitting diode, or the like. The user input unit 1507 includes a touch panel 15071 and other input devices 15072. The touch panel 15071 is also referred to as a touchscreen. The touch panel 15071 may include two parts: a touch detection apparatus and a touch controller. The other input devices 15072 may include but are not limited to a physical keyboard, a function key (such as a volume control key or a switch key), a trackball, a mouse, and a joystick. Details are not described herein again.

In this embodiment of this application, after receiving downlink data from a network-side device, the radio frequency unit 1501 sends the downlink data to the processor 1510 for processing, and in addition, sends uplink data to the network-side device. Generally, the radio frequency unit 1501 includes but is not limited to an antenna, at least one amplifier, a transceiver, a coupler, a low noise amplifier, a duplexer, and the like.

The memory 1509 may be configured to store software programs or instructions and various data. The memory 1509 may primarily include a program or instruction storage area and a data storage area. The program or instruction storage area may store an operating system, an application program or instructions (such as an audio play function and an image play function) required by at least one function, and the like. In addition, the memory 1509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1510 may include one or more processing units. Optionally, the processor 1510 may integrate an application processor and a modem processor. The application processor mainly processes the operating system, a user interface, an application program, or an instruction. The modem processor mainly processes wireless communication. For example, the modem processor is a baseband processor. It may be understood that the modem processor may alternatively be not integrated in the processor 1510.

The processor 1510 is configured to determine a sidelink SL feedback resource, where the SL feedback resource is used by first UE to send feedback information.

In this embodiment of this application, the sidelink SL feedback resource is determined, the SL feedback resource is used by the first UE to send the feedback information, and the feedback resource is determined by the UE. Therefore, flexibility of resource scheduling is improved, and channel access efficiency of the UE can be improved. In this way, the feedback information is sent in an unlicensed frequency band, and system efficiency is improved.

Optionally, the sidelink SL feedback resource satisfies at least one of the following:
the SL feedback resource is a distributed resource;
the SL feedback resource is a localized resource; and
the SL feedback resource is determined based on resource allocation of a physical sidelink control channel PSCCH and/or a physical sidelink shared channel PSSCH.

Optionally, the processor 1510 is further configured to perform at least one of the following:
determining a bandwidth occupied by the SL feedback resource;
determining a frequency domain resource granularity occupied by the SL feedback resource;
determining a frequency domain resource spacing of the SL feedback resource; and
determining at least one of a frequency domain resource position, a frequency domain resource size, an interlace index, and an interlace quantity of the SL feedback resource.

Optionally, the processor 1510 is further configured to perform at least one of the following:
determining a bandwidth occupied by the SL feedback resource;
determining a frequency domain resource granularity occupied by the SL feedback resource; and
determining a frequency domain resource position and/or a frequency domain resource size of the SL feedback resource.

Optionally, the bandwidth occupied by the SL feedback resource includes at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

Optionally, the frequency domain resource granularity occupied by the SL feedback resource includes at least one of the following:
one physical resource block PRB;
M physical resource blocks PRBs, where M is a protocol-predefined, preconfigured, or configured parameter;
a subchannel size;
a resource block group RBG; and
one or more resource elements REs.

Optionally, the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

Optionally, the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a value indicated by a media access control control element MAC CE, downlink control information DCI, or sidelink control information SCI; and
the at least one of the frequency domain resource position, the frequency domain resource size, the interlace index, and the interlace quantity of the SL feedback resource is a parameter randomly selected within a preconfigured range.

Optionally, the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a value predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

Optionally, the RBG satisfies at least one of the following:
an RBG size is a protocol-predefined, preconfigured, or configured parameter;
an RBG quantity is a protocol-predefined, preconfigured, or configured parameter;
an RBG quantity is obtained based on a quantity of BWPs or RB sets; and
an RBG quantity is obtained based on a carrier bandwidth of a BWP or an RB set.

Optionally, the one or more resource elements REs satisfy at least one of the following:
RE density is related to a subcarrier spacing SCS;
a spacing between REs is related to an SCS;
being used to predefine an interlace quantity in a protocol, or preconfigure an interlace quantity, or configure an interlace quantity; and
a quantity of REs in one or more resource blocks is one or more, where the quantity of REs in the one or more resource blocks is a protocol-predefined, or preconfigured, or configured value.

Optionally, the slot number or the slot quantity satisfies:
a remainder on diving S_num by I_num is equal to A (that is, S_num mod (I_num) = A), where S_num is the slot number or the slot quantity;
A is a preconfigured value or a value obtained based on the UE ID; and
I_num is a protocol-predefined, preconfigured, or configured value, or I_num is related to the interlace quantity.

Optionally, the UE ID is at least one of the following:
an ID of the first UE;
an ID of feedback-information receiving-side device;
an ID of UE sending the PSCCH and/or the PSSCH corresponding to the feedback information; and
an ID of scheduling UE.

Optionally, that the SL feedback resource is determined based on resource allocation of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH; and
in a case that a resource of the PSCCH and/or the PSSCH is a localized resource, the SL feedback resource is a localized resource or a distributed resource, where the SL feedback resource being a localized resource or a distributed resource is determined by a preconfiguration, a configuration, or an indication.

Optionally, a sequence of the feedback information satisfies at least one of the following:
the feedback information is transmitted by using a sequence with a sequence length of N; and
the feedback information is detected by feedback-information receiving-side device based on a predefined or preconfigured sequence length, where
a value of N satisfies one of the following:
   the value is a predefined or preconfigured value;
   the value is related to an SCS configuration; and
   the value is related to an available resource.

Optionally, a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

In this embodiment of this application, the sidelink SL feedback resource is determined, the SL feedback resource is used by the first UE to send the feedback information, the feedback resource is determined by the UE, and the feedback resource may be a distributed resource or a localized resource, or allocation of the feedback resource is determined based on resource allocation of the PSCCH and/or PSSCH. Therefore, channel access efficiency of the UE can be improved. In this way, the feedback information is sent in the unlicensed frequency band, and system efficiency is improved.

In another optional embodiment, the processor 1510 is configured to detect or receive feedback information on a sidelink SL feedback resource, where the SL feedback resource is used by first UE to send the feedback information.

Optionally, the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

Optionally, in a case that the SL feedback resource is a distributed resource, the sidelink SL feedback resource includes at least one of the following:
a bandwidth occupied by the SL feedback resource;
a frequency domain resource granularity occupied by the SL feedback resource;
a frequency domain resource spacing of the SL feedback resource; and
at least one of a frequency domain resource position, a frequency domain resource size, an interlace index, and an interlace quantity of the SL feedback resource.

Optionally, in a case that the SL feedback resource is a localized resource, the sidelink SL feedback resource includes at least one of the following:
a bandwidth occupied by the SL feedback resource;
a frequency domain resource granularity occupied by the SL feedback resource; and
a frequency domain resource position and/or a frequency domain resource size of the SL feedback resource.

Optionally, the bandwidth occupied by the SL feedback resource includes at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

Optionally, the frequency domain resource granularity occupied by the SL feedback resource includes at least one of the following:
one physical resource block PRB;
M physical resource blocks PRBs, where M is a protocol-predefined, preconfigured, or configured parameter;
a subchannel size;
a resource block group RBG; and
one or more resource elements REs.

Optionally, the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

Optionally, the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a parameter indicated by at least one of a media access control control element MAC CE, downlink control information DCI, and sidelink control information SCI; and
the at least one of the frequency domain resource position, the frequency domain resource size, the interlace index, and the interlace quantity of the SL feedback resource is a parameter randomly selected within a preconfigured range.

Optionally, the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a parameter predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

Optionally, the RBG satisfies at least one of the following:
an RBG size is a protocol-predefined, preconfigured, configured, or indicated parameter;
an RBG quantity is a protocol-predefined, preconfigured, or configured parameter;
an RBG quantity is obtained based on a quantity of BWPs or RB sets; and
an RBG quantity is obtained based on a carrier bandwidth of a BWP or an RB set.

Optionally, the one or more resource elements REs satisfy at least one of the following:
RE density is related to a subcarrier spacing SCS;
a spacing between REs is related to an SCS;
being used to predefine an interlace quantity in a protocol, or preconfigure an interlace quantity, or configure an interlace quantity; and
a quantity of REs in one or more resource blocks is one or more, where the quantity of REs in the one or more resource blocks is a protocol-predefined, or preconfigured, or configured value.

Optionally, the slot number or the slot quantity satisfies:
a remainder on diving S_num by I_num is equal to A (that is, S_num mod (I_num) = A), where S_num is the slot number or the slot quantity;
A is a preconfigured value or a value obtained based on the UE ID; and
I_num is a protocol-predefined, preconfigured, or configured value, or I_num is related to the interlace quantity.

Optionally, the UE ID is at least one of the following:
an ID of the first UE;
an ID of feedback-information receiving-side device;
an ID of UE sending the PSCCH and/or the PSSCH corresponding to the feedback information; and
an ID of scheduling UE.

Optionally, that the SL feedback resource is determined based on resource allocation or a resource structure of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH;
a resource structure of the SL feedback resource is the same as the resource structure of the PSCCH and/or the PSSCH; and
in a case that a resource of the PSCCH and/or the PSSCH is a localized resource, the SL feedback resource is a localized resource or a distributed resource, where the SL feedback resource being a localized resource or a distributed resource is determined by a predefinition, a preconfiguration, a configuration, or an indication.

Optionally, a sequence of the feedback information satisfies at least one of the following:
the feedback information is transmitted by using a sequence with a sequence length of N; and
the feedback information is detected by feedback-information receiving-side device based on a predefined or preconfigured sequence length, where
a value of N satisfies one of the following:
   the value is a predefined or preconfigured value;
   the value is related to an SCS configuration; and
   the value is related to an available resource.

Optionally, a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

In this embodiment of this application, the feedback information is detected or received on the sidelink SL feedback resource, and the SL feedback resource is used by the first UE to send the feedback information. Therefore, flexibility of resource scheduling is improved, and channel access efficiency of the UE can be improved. In this way, system efficiency is improved.

An embodiment of this application further provides a network-side device, including a processor and a communications interface. The processor is configured to detect feedback information on a first resource, where the first resource is one or more resources of first UE for performing a channel access procedure. The network-side device embodiment corresponds to the foregoing method embodiment of the network-side device, and each implementation process and implementation of the foregoing method embodiment can be applied to the network-side device embodiment, with the same technical effect achieved.

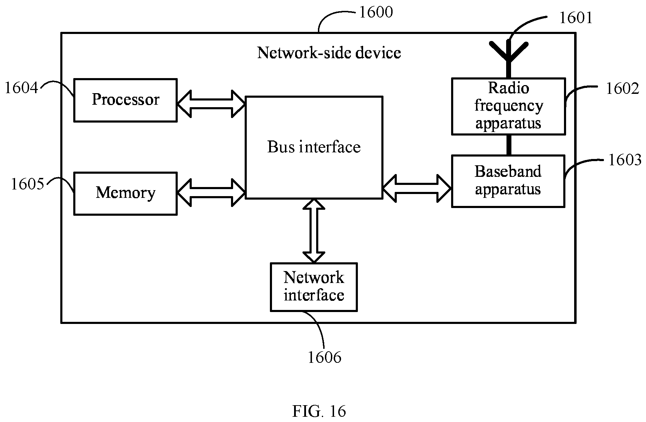

Specifically, an embodiment of this application further provides a network-side device. As shown in FIG. 16, the network-side device 1600 includes an antenna 1601, a radio frequency apparatus 1602, and a baseband apparatus 1603. The antenna 1601 is connected to the radio frequency apparatus 1602. In an uplink direction, the radio frequency apparatus 1602 receives information by using the antenna 1601, and sends the received information to the baseband apparatus 1603 for processing. In a downlink direction, the baseband apparatus 1603 processes to-be-sent information, and sends the information to the radio frequency apparatus 1602; and the radio frequency apparatus 1602 processes the received information and then sends the information out by using the antenna 1601.

The frequency band processing apparatus may be located in the baseband apparatus 1603. The method performed by the network-side device in the foregoing embodiment may be implemented in the baseband apparatus 1603, and the baseband apparatus 1603 includes a processor 1604 and a memory 1605.

The baseband apparatus 1603 may include, for example, at least one baseband processing unit, where a plurality of chips are disposed on the baseband processing unit. As shown in FIG. 16, one of the chips is, for example, the processor 1604, connected to the memory 1605, to invoke a program in the memory 1605 to perform the operation of the network device shown in the foregoing method embodiment.

The baseband apparatus 1603 may further include a network interface 1606, configured to exchange information with the radio frequency apparatus 1602, where the interface is, for example, a common public radio interface (common public radio interface, CPRI for short).

Specifically, the network-side device in this embodiment of the present invention further includes a program or instructions stored in the memory 1605 and executable on the processor 1604. When the processor 1604 invokes the program or instructions in the memory 1605, the method performed by each module shown in FIG. 13 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the method for determining a sidelink feedback resource is implemented, with the same technical effect achieved. To avoid repetition, details are not described herein again.

The processor is a processor in the UE in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communications interface. The communications interface is coupled to the processor. The processor is configured to run a program or instructions to implement each process of the foregoing embodiment of the method for determining a sidelink feedback resource, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing UE (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A method for determining a sidelink feedback resource, comprising:
determining, by first UE, a sidelink SL feedback resource, wherein the SL feedback resource is used by the first UE to send feedback information.

2. The method for determining a sidelink feedback resource according to claim 1, wherein the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

3. The method for determining a sidelink feedback resource according to claim 2, wherein in a case that the SL feedback resource is a distributed resource, the determining a sidelink SL feedback resource comprises at least one of the following:
determining a bandwidth occupied by the SL feedback resource;
determining a frequency domain resource granularity occupied by the SL feedback resource;
determining a frequency domain resource spacing of the SL feedback resource; and
determining at least one of a frequency domain resource position, a frequency domain resource size, an interlace index, and an interlace quantity of the SL feedback resource.

4. The method for determining a sidelink feedback resource according to claim 2, wherein in a case that the SL feedback resource is a localized resource, the determining a sidelink SL feedback resource comprises at least one of the following:
determining a bandwidth occupied by the SL feedback resource;
determining a frequency domain resource granularity occupied by the SL feedback resource; and
determining a frequency domain resource position and/or a frequency domain resource size of the SL feedback resource.

5. The method for determining a sidelink feedback resource according to claim 3 or 4, wherein the bandwidth occupied by the SL feedback resource comprises at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

6. The method for determining a sidelink feedback resource according to claim 3 or 4, wherein the frequency domain resource granularity occupied by the SL feedback resource comprises at least one of the following:
one physical resource block PRB;
M physical resource blocks PRBs, wherein M is a protocol-predefined, preconfigured, or configured parameter;
a subchannel size;
a resource block group RBG; and
one or more resource elements REs.

7. The method for determining a sidelink feedback resource according to claim 3, wherein the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

8. The method for determining a sidelink feedback resource according to claim 3, wherein the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier ID;
the at least one of the frequency domain resource position, the frequency domain resource size, the interlace index, and the interlace quantity of the SL feedback resource is a value predefined, determined according to a preset rule, preconfigured, or configured, and/or a parameter indicated by at least one of a media access control control element MAC CE, downlink control information DCI, and sidelink control information SCI; and
the at least one of the frequency domain resource position, the frequency domain resource size, the interlace index, and the interlace quantity of the SL feedback resource is a parameter randomly selected within a preconfigured range.

9. The method for determining a sidelink feedback resource according to claim 4, wherein the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a parameter predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

10. The method for determining a sidelink feedback resource according to claim 6, wherein the RBG satisfies at least one of the following:
an RBG size is a protocol-predefined, preconfigured, configured, or indicated parameter;
an RBG quantity is a protocol-predefined, preconfigured, or configured parameter;
an RBG quantity is obtained based on a quantity of BWPs or RB sets; and
an RBG quantity is obtained based on a carrier bandwidth of a BWP or an RB set.

11. The method for determining a sidelink feedback resource according to claim 6, wherein the one or more resource elements REs satisfy at least one of the following:
RE density is related to a subcarrier spacing SCS;
a spacing between REs is related to an SCS;
being used to predefine an interlace quantity in a protocol, or preconfigure an interlace quantity, or configure an interlace quantity; and
a quantity of REs in one or more resource blocks is one or more, wherein the quantity of REs in the one or more resource blocks is a protocol-predefined, or preconfigured, or configured value.

12. The method for determining a sidelink feedback resource according to claim 8 or 9, wherein the slot number or the slot quantity satisfies:
a remainder on diving S_num by I_num is equal to A, wherein
S_num is the slot number or the slot quantity;
A is a preconfigured value or a value obtained based on the UE ID; and
I_num is a protocol-predefined, preconfigured, or configured value, or I_num is related to the interlace quantity.

13. The method for determining a sidelink feedback resource according to claim 8 or 9, wherein the UE ID is at least one of the following:
an ID of the first UE;
an ID of a feedback-information receiving-side device;
an ID of UE sending the PSCCH and/or the PSSCH corresponding to the feedback information; and
an ID of scheduling UE.

14. The method for determining a sidelink feedback resource according to claim 2, wherein that the SL feedback resource is determined based on resource allocation or a resource structure of a physical sidelink control channel PSCCH and/or a physical sidelink shared channel PSSCH satisfies at least one of the following:
a resource allocation mode of the SL feedback resource is same as a resource allocation mode of the PSCCH and/or the PSSCH;
a resource structure of the SL feedback resource is same as the resource structure of the PSCCH and/or the PSSCH; and
in a case that a resource of the PSCCH and/or the PSSCH is a localized resource, the SL feedback resource is a localized resource or a distributed resource, wherein the SL feedback resource being a localized resource or a distributed resource is determined by a predefinition, a preconfiguration, a configuration, or an indication.

15. The method for determining a sidelink feedback resource according to claim 1, wherein a sequence of the feedback information satisfies at least one of the following:
the feedback information is transmitted by using a sequence with a sequence length of N; and
the feedback information is detected by a feedback-information receiving-side device based on a predefined or preconfigured sequence length, wherein
a value of N satisfies one of the following:
the value is a predefined or preconfigured value;
the value is related to an SCS configuration; and
the value is related to an available resource.

16. The method for determining a sidelink feedback resource according to claim 1, wherein a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

17. A method for determining a sidelink feedback resource, comprising:
detecting or receiving, by a feedback-information receiving-side device, feedback information on a sidelink SL feedback resource, wherein the SL feedback resource is used by first UE to send the feedback information.

18. The method for determining a sidelink feedback resource according to claim 17, wherein the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

19. The method for determining a sidelink feedback resource according to claim 18, wherein in a case that the SL feedback resource is a distributed resource, the sidelink SL feedback resource comprises at least one of the following:
a bandwidth occupied by the SL feedback resource;
a frequency domain resource granularity occupied by the SL feedback resource;
a frequency domain resource spacing of the SL feedback resource; and
at least one of a frequency domain resource position, a frequency domain resource size, an interlace index, and an interlace quantity of the SL feedback resource.

20. The method for determining a sidelink feedback resource according to claim 18, wherein in a case that the SL feedback resource is a localized resource, the sidelink SL feedback resource comprises at least one of the following:
a bandwidth occupied by the SL feedback resource;
a frequency domain resource granularity occupied by the SL feedback resource; and
a frequency domain resource position and/or a frequency domain resource size of the SL feedback resource.

21. The method for determining a sidelink feedback resource according to claim 19 or 20, wherein the bandwidth occupied by the SL feedback resource comprises at least one of the following:
a bandwidth part BWP;
a bandwidth of one or more carriers;
a bandwidth of the PSCCH;
a bandwidth of the PSSCH;
a subset of frequency domain of the PSCCH;
a subset of frequency domain of the PSSCH; and
a frequency domain range of one or more resource block RB sets.

22. The method for determining a sidelink feedback resource according to claim 19 or 20, wherein the frequency domain resource granularity occupied by the SL feedback resource comprises at least one of the following:
one physical resource block PRB;
M physical resource blocks PRBs, wherein M is a protocol-predefined, preconfigured, or configured parameter;
a subchannel size;
a resource block group RBG; and
one or more resource elements REs.

23. The method for determining a sidelink feedback resource according to claim 19, wherein the frequency domain resource spacing of the SL feedback resource satisfies at least one of the following:
the frequency domain resource spacing is a spacing of two adjacent frequency domain resource granularities or a gap between two adjacent frequency domain resource granularities;
the frequency domain resource spacing is a protocol-predefined, preconfigured, configured, or indicated parameter; and
a unit of the frequency domain resource spacing is a PRB, M PRBs, a subchannel size, an RBG, one RE, or a plurality of REs.

24. The method for determining a sidelink feedback resource according to claim 19, wherein the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a parameter indicated by at least one of a media access control control element MAC CE, downlink control information DCI, and sidelink control information SCI; and
the at least one of the frequency domain resource position, the frequency domain resource size, the interlace index, and the interlace quantity of the SL feedback resource is a parameter randomly selected within a preconfigured range.

25. The method for determining a sidelink feedback resource according to claim 20, wherein the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a parameter predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

26. The method for determining a sidelink feedback resource according to claim 22, wherein the RBG satisfies at least one of the following:
an RBG size is a protocol-predefined, preconfigured, configured, or indicated parameter;
an RBG quantity is a protocol-predefined, preconfigured, or configured parameter;
an RBG quantity is obtained based on a quantity of BWPs or RB sets; and
an RBG quantity is obtained based on a carrier bandwidth of a BWP or an RB set.

27. The method for determining a sidelink feedback resource according to claim 22, wherein the one or more resource elements REs satisfy at least one of the following:
RE density is related to a subcarrier spacing SCS;
a spacing between REs is related to an SCS;
being used to predefine an interlace quantity in a protocol, or preconfigure an interlace quantity, or configure an interlace quantity; and
a quantity of REs in one or more resource blocks is one or more, wherein the quantity of REs in the one or more resource blocks is a protocol-predefined, or preconfigured, or configured value.

28. The method for determining a sidelink feedback resource according to claim 24 or 25, wherein the slot number or the slot quantity satisfies:
a remainder on diving S_num by I_num is equal to A, wherein
S_num is the slot number or the slot quantity;
A is a preconfigured value or a value obtained based on the UE ID; and
I_num is a protocol-predefined, preconfigured, or configured value, or I_num is related to the interlace quantity.

29. The method for determining a sidelink feedback resource according to claim 24 or 25, wherein the UE ID is at least one of the following:
an ID of the first UE;
an ID of the feedback-information receiving-side device;
an ID of UE sending the PSCCH and/or the PSSCH corresponding to the feedback information; and
an ID of scheduling UE.

30. The method for determining a sidelink feedback resource according to claim 18, wherein that the SL feedback resource is determined based on resource allocation or a resource structure of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH;
a resource structure of the SL feedback resource is the same as the resource structure of the PSCCH and/or the PSSCH; and
in a case that a resource of the PSCCH and/or the PSSCH is a localized resource, the SL feedback resource is a localized resource or a distributed resource, wherein the SL feedback resource being a localized resource or a distributed resource is determined by a predefinition, a preconfiguration, a configuration, or an indication.

31. The method for determining a sidelink feedback resource according to claim 17, wherein a sequence of the feedback information satisfies at least one of the following:
the feedback information is transmitted by using a sequence with a sequence length of N; and
the feedback information is detected by feedback-information receiving-side device based on a predefined or preconfigured sequence length, wherein
a value of N satisfies one of the following:
the value is a predefined or preconfigured value;
the value is related to an SCS configuration; and
the value is related to an available resource.

32. The method for determining a sidelink feedback resource according to claim 17, wherein a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

33. An apparatus for determining a sidelink feedback resource, comprising:
a first determining unit, configured to determine a sidelink SL feedback resource, wherein the SL feedback resource is used by first UE to send feedback information.

34. The apparatus for determining a sidelink feedback resource according to claim 33, wherein the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

35. The apparatus for determining a sidelink feedback resource according to claim 34, wherein in a case that the SL feedback resource is a distributed resource, the first determining unit is configured to perform at least one of the following:
determining a bandwidth occupied by the SL feedback resource;
determining a frequency domain resource granularity occupied by the SL feedback resource;
determining a frequency domain resource spacing of the SL feedback resource; and
determining at least one of a frequency domain resource position, a frequency domain resource size, an interlace index, and an interlace quantity of the SL feedback resource.

36. The apparatus for determining a sidelink feedback resource according to claim 34, wherein in a case that the SL feedback resource is a localized resource, the first determining unit is configured to perform at least one of the following:
determining a bandwidth occupied by the SL feedback resource;
determining a frequency domain resource granularity occupied by the SL feedback resource; and
determining a frequency domain resource position and/or a frequency domain resource size of the SL feedback resource.

37. The apparatus for determining a sidelink feedback resource according to claim 35, wherein the at least one of the frequency domain resource position, the frequency domain resource size, the interlace index, and the interlace quantity of the SL feedback resource satisfies at least one of the following:
the at least one of the frequency domain resource position, the frequency domain resource size, the interlace index, and the interlace quantity of the SL feedback resource is determined based on a slot number or a slot quantity;
the at least one of the frequency domain resource position, the frequency domain resource size, the interlace index, and the interlace quantity of the SL feedback resource is determined based on a UE identifier UE ID;
the at least one of the frequency domain resource position, the frequency domain resource size, the interlace index, and the interlace quantity of the SL feedback resource is a value predefined, determined according to a preset rule, preconfigured, or configured, and/or a parameter indicated by at least one of a media access control control element MAC CE, downlink control information DCI, and sidelink control information SCI; and
the at least one of the frequency domain resource position, the frequency domain resource size, the interlace index, and the interlace quantity of the SL feedback resource is a parameter randomly selected within a preconfigured range.

38. The apparatus for determining a sidelink feedback resource according to claim 36, wherein the frequency domain resource position and/or the frequency domain resource size of the SL feedback resource satisfy/satisfies at least one of the following:
the frequency domain resource position and/or the frequency domain resource size of the SL feedback resource are/is determined based on a slot number or a slot quantity;
the frequency domain resource position and/or the frequency domain resource size of the SL feedback resource are/is determined based on a UE ID;
the frequency domain resource position and/or the frequency domain resource size of the SL feedback resource are/is a value predefined, determined according to a preset rule, preconfigured, or configured, and/or a parameter indicated by at least one of a MAC CE, DCI, and SCI; and
the frequency domain resource position and/or the frequency domain resource size of the SL feedback resource are/is a parameter randomly selected within a preconfigured range.

39. The apparatus for determining a sidelink feedback resource according to claim 34, wherein that the SL feedback resource is determined based on resource allocation or a resource structure of a physical sidelink control channel PSCCH and/or a physical sidelink shared channel PSSCH satisfies at least one of the following:
a resource allocation mode of the SL feedback resource is the same as a resource allocation mode of the PSCCH and/or the PSSCH;
a resource structure of the SL feedback resource is the same as the resource structure of the PSCCH and/or the PSSCH; and
in a case that a resource of the PSCCH and/or the PSSCH is a localized resource, the SL feedback resource is a localized resource or a distributed resource, wherein the SL feedback resource being a localized resource or a distributed resource is determined by a predefinition, a preconfiguration, a configuration, or an indication.

40. The apparatus for determining a sidelink feedback resource according to claim 33, wherein a sequence of the feedback information satisfies at least one of the following:
the feedback information is transmitted by using a sequence with a sequence length of N; and
the feedback information is detected by feedback-information receiving-side device based on a predefined or preconfigured sequence length, wherein
a value of N satisfies one of the following:
the value is a predefined or preconfigured value;
the value is related to an SCS configuration; and
the value is related to an available resource.

41. The apparatus for determining a sidelink feedback resource according to claim 33, wherein a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

42. An apparatus for determining a sidelink feedback resource, comprising:
a first processing unit, configured to detect or receive feedback information on a sidelink SL feedback resource, wherein the SL feedback resource is used by first UE to send the feedback information.

43. The apparatus for determining a sidelink feedback resource according to claim 42, wherein the sidelink SL feedback resource satisfies at least one of the following:
the SL feedback resource is a distributed resource;
the SL feedback resource is a localized resource; and
the SL feedback resource is determined based on resource allocation or a resource structure of a physical sidelink control channel PSCCH and/or a physical sidelink shared channel PSSCH.

44. The apparatus for determining a sidelink feedback resource according to claim 42, wherein a sequence of the feedback information satisfies at least one of the following:
the feedback information is transmitted by using a sequence with a sequence length of N; and
the feedback information is detected by feedback-information receiving-side device based on a predefined or preconfigured sequence length , wherein
a value of N satisfies one of the following:
the value is a predefined or preconfigured value;
the value is related to an SCS configuration; and
the value is related to an available resource.

45. The apparatus for determining a sidelink feedback resource according to claim 42, wherein a resource mapping of the feedback information satisfies at least one of the following:
a feedback information sequence is mapped from a lowest PRB of a frequency domain resource;
a feedback information sequence is mapped from a highest PRB of a frequency domain resource;
a feedback information sequence on each PRB is a repetition of the feedback information sequence; and
the resource mapping is related to an interlace index.

46. A UE, comprising a processor, a memory, and a program or instructions stored in the memory and executable on the processor, wherein when the program or instructions are executed by the processor, the steps of the method for determining a sidelink feedback resource according to any one of claims 1 to 16 are implemented, or the steps of the method for determining a sidelink feedback resource according to any one of claims 17 to 32 are implemented.

47. A network-side device, comprising a processor, a memory, and a program or instructions stored in the memory and executable on the processor, wherein when the program or instructions are executed by the processor, the steps of the method for determining a sidelink feedback resource according to any one of claims 17 to 32 are implemented.

48. A readable storage medium, wherein the readable storage medium stores a program or instructions, and when the program or instructions are executed by a processor, the steps of the method for determining a sidelink feedback resource according to any one of claims 1 to 16 are implemented, or the steps of the method for determining a sidelink feedback resource according to any one of claims 17 to 32 are implemented.

49. A chip, wherein the chip comprises a processor and a communications interface, the communications interface is coupled to the processor, and the processor is configured to run a program or instructions to implement the steps of the method for determining a sidelink feedback resource according to any one of claims 1 to 16, or implement the steps of the method for determining a sidelink feedback resource according to any one of claims 17 to 32.

50. A computer program or a program product, wherein the computer program or the program product is stored in a non-volatile storage medium, and the program or the program product is executed by at least one processor to implement the steps of the method for determining a sidelink feedback resource according to any one of claims 1 to 16, or implement the steps of the method for determining a sidelink feedback resource according to any one of claims 17 to 32.
